# EUROPÄISCHE PATENTANMELDUNG

(11) **EP 2 868 840 A1**
(43) Veröffentlichungstag der Anmeldung: **06.05.2015**
(21) Anmeldenummer: 14191125.5
(22) Anmeldetag: 30.10.2014
(51) Int. Cl.: E04G 21/32, F16B 13/08

(54) **Anschlagvorrichtung für eine Absturzsicherung**

(30) Priorität: 04.11.2013 AT 507222013
(71) Anmelder: INNOTECH ARBEITSSCHUTZ GMBH, 4656 Kirchham (AT)
(72) Erfinder: Reiter, Gerald, 4694 Ohlsdorf (AT)
(74) Vertreter: Patentanwaltskanzlei Hübscher

(57) **Zusammenfassung**

Es wird eine Anschlagvorrichtung für eine Absturzsicherung mit einem einen Anschlagpunkt (4) aufnehmenden, als Gewindestange (14) ausgebildeten Ankerbolzen (3) beschrieben, der einen Kippdübel (5) mit einem um eine Querachse anschlagbegrenzt zwischen einer eingeschwenkten Montagestellung und einer ausgeschwenkten Arbeitsstellung drehbar gelagerten, zweiarmigen Kippbalken (7) bildet, von dessen Hebelarmen (8, 9) einer ein größeres Gewicht als der andere besitzt. Um vorteilhafte Konstruktionsbedingungen zu schaffen, wird vorgeschlagen, dass der Kippbalken (7) in einer am Ende des Ankerbolzens (3) vorgesehenen Lagergabel (6) gelagert ist und eine in der Arbeitsstellung dem Anschlagpunkt (4) zugekehrte konvex gerundete Anlagefläche aufweist.

## Beschreibung

Die Erfindung bezieht sich auf eine Anschlagvorrichtung für eine Absturzsicherung mit einem einen Anschlagpunkt aufnehmenden, als Gewindestange ausgebildeten Ankerbolzen, der einen Kippdübel mit einem um eine Querachse anschlagbegrenzt zwischen einer eingeschwenkten Montagestellung und einer ausgeschwenkten Arbeitsstellung drehbar gelagerten, zweiarmigen Kippbalken bildet, von dessen Hebelarmen einer ein größeres Gewicht als der andere besitzt.

Um in einfacher Art einen Anschlagpunkt für eine persönliche Sicherheitsausrüstung beispielsweise auf einem Blechdach festlegen zu können, sind Anschlagvorrichtungen bekannt (DE 10 2007 039 966 A1, DE 2007 053556 A1, DE 10 2006 041 592 A1,), die einen als Gewindestange ausgebildeten Ankerbolzen in Form eines Kippdübels aufweisen. Zu diesem Zweck durchsetzt die Gewindestange eine Mutter, die eine Querachse zur Lagerung eines zweiarmigen Kippbalkens trägt, sodass der gegen die Gewindestange in eine Montagestellung eingeschwenkte Kippbalken durch eine entsprechende Durchtrittsbohrung hinter die Dachhaut eingeführt werden kann, um dann aufgrund eines Gewichtsmoments ungleich schwerer Balkenarme selbständig in eine Arbeitsstellung auszuschwenken, in der der quer zur Durchtrittsbohrung anschlagbegrenzt gehaltene Kippbalken die Ränder der Durchtrittsbohrung hintergreift und sich gegen ein Herausziehen des Ankerbolzens aus der Durchtrittsbohrung an den hintergriffenen Lochrändern abstützt. Da der Kippbalken nahe an die Gewindestange des Ankerbolzens eingeschwenkt werden soll, um den Durchmesser der Durchtrittsbohrung in der Dachhaut klein halten zu können, werden die Kippbalken als U-Profil ausgebildet, das die Gewindestange in der Montagestellung des Kippdübels zwischen seinen Schenkeln aufnimmt. Diese Schenkel legen sich allerdings mit ihren Längsrändern lastabtragend an die Dachhaut an, sodass im Sicherungsfall die Gefahr besteht, dass die Schenkel des Kippbalkens die Dachhaut im Bereich der Durchtrittsbohrung aufreißen und die auftretenden Sturzlasten nicht mehr auf die Dachhaut übertragen können.

Um Gegenstände an Hohlräumen befestigen zu können, ist es darüber hinaus bekannt (DE 198 37 274 A1), den mit einem Gewinde versehenen Ankerbolzen an seinem in den Hohlraum ragenden Ende geschlitzt auszuführen und in diesem Schlitz einen zweiarmigen Kippbalken zu lagern, der eine dem Durchmesser des Ankerbolzens entsprechende Breite aufweist und daher in der in den Schlitz des Ankerbolzens eingeschwenkten Stellung nicht über den Umfang des Ankerbolzens vorsteht, sodass die Durchtrittsöffnung in der Hohlraumwand zum Einführen des Ankerbolzenendes mit dem Kippbalken klein gehalten werden kann. Eine solche Konstruktion eignet sich allerdings nicht für die Befestigung einer Anschlagvorrichtung für eine Absturzsicherung, weil bei einer Sturzsicherung aufgrund der geringen Dicke des Kippbalkens die Gefahr eines Aufreißens der Dachhaut besteht.

Der Erfindung liegt somit die Aufgabe zugrunde, eine Anschlagvorrichtung mit einem Kippdübel zur Befestigung an einer Dachhaut so auszugestalten, dass die im Sturzfall auftreten statischen und dynamischen Lasten sicher auf die Dachhaut abgetragen werden können.

Ausgehend von einer Anschlagvorrichtung der eingangs geschilderten Art löst die Erfindung die gestellte Aufgabe dadurch, dass der Kippbalken in einer am Ende des Ankerbolzens vorgesehenen Lagergabel gelagert ist und eine in der Arbeitsstellung dem Anschlagpunkt zugekehrte konvex gerundete Anlagefläche aufweist.

Durch das Vorsehen einer Lagergabel für den Kippbalken am Ende des Ankerbolzens wird die Voraussetzung geschaffen, den Kippbalken nicht als U-Profil ausbilden zu müssen, sodass der Kippbalken mit einer konvex gerundeten Anlagefläche versehen werden kann, mit der die Dachhaut hintergriffen wird. Mit der konvex gerundeten Anlagefläche wird im Fall eines Absturzes eine örtliche Überlastung der Dachhaut durch Kanten des Kippbalkens vermieden und damit ein sicherer Halt der Anschlagvorrichtung in der Dachhaut gewährleistet. Die einfache Montage des Kippdübels ändert sich dabei nicht, weil ja wiederum der gegen die Lagergabel eingeschwenkte Kippbalken durch die Durchtrittsbohrung in der Dachhaut eingeführt werden kann, bevor der Ankerbolzen nach einem schwerkraftbedingten Ausschwenken des Kippbalkens in seine Arbeitsstellung gezogen und in dieser angezogenen Arbeitsstellung fixiert wird.

Besonders einfache Konstruktionsverhältnisse ergeben sich, wenn der Kippbalken einen kreiszylindrischen Querschnitt aufweist. Eine solche Kippbalkenausführung sichert eine konvex gerundete Anlagefläche. Es braucht lediglich dafür gesorgt zu werden, dass die Enden eines solchen Kippbalkens stirnseitig ebenfalls gerundet werden.

Da der Ankerbolzen als Gewindestange ausgebildet ist, ergibt sich eine einfache Möglichkeit der Verbindung zwischen der Gewindestange und der Lagergabel für den Kippbalken, wenn die Lagergabel einen U-förmigen Bügel bildet und wenn die Gewindestange des Ankerbolzens den U-förmigen Bügel im Stegbereich zwischen den beiden Schenkeln durchsetzt, wobei der Stegbereich des U-förmigen Bügels am Ende der Gewindestange zwischen zwei Muttern festgeklemmt ist. Der U-förmige Bügel der Lagergabel kann somit in einfacher Weise an einer Gewindestange festgeschraubt werden.

In der Zeichnung ist der Erfindungsgegenstand beispielsweise dargestellt. Es zeigen
- Fig. 1: eine erfindungsgemäße Anschlagvorrichtung für eine Absturzsicherung in der Arbeitsstellung in einem vereinfachten Längsschnitt,
- Fig. 2: diese Anschlagvorrichtung in einem Schnitt nach der Linie II-II der Fig. 1 und die
- Fig. 3: und 4 den durch den Ankerbolzen gebildeten Kippdübel in einer Vorderund einer Seitenansicht einerseits in der Montagestellung und anderseits in der Arbeitsstellung in einem größeren Maßstab.

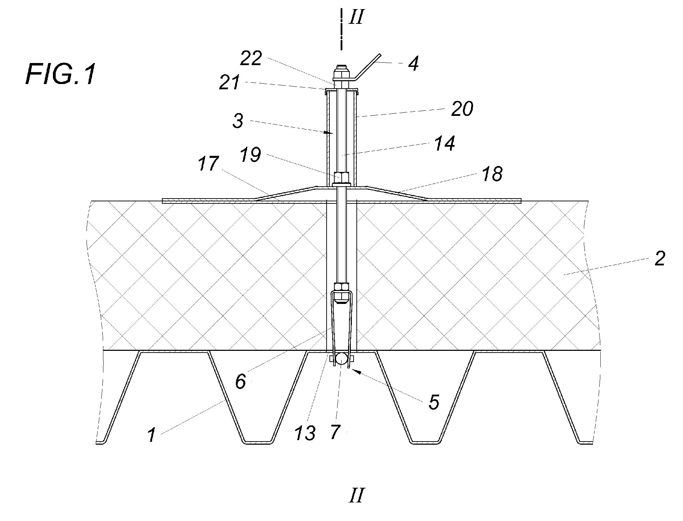

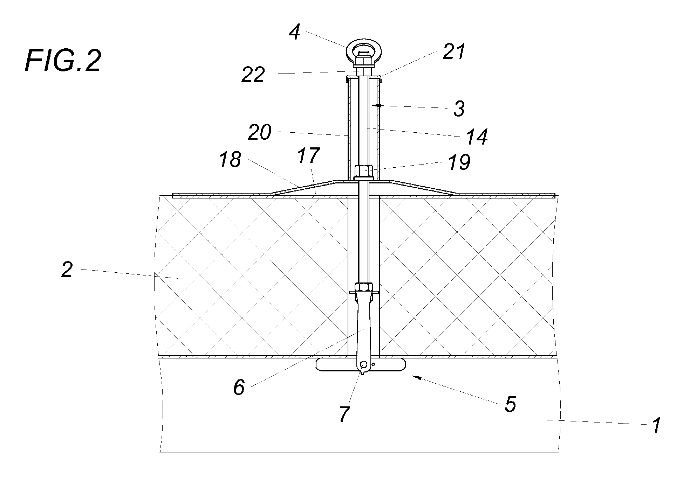

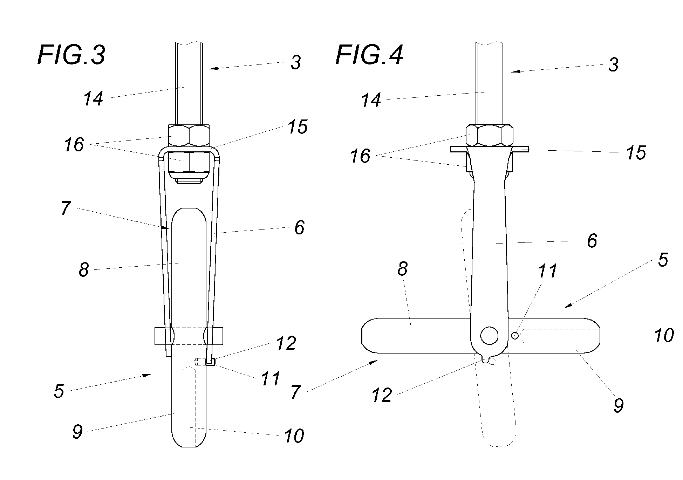

Wie den Fig. 1 und 2 entnommen werden kann, gilt es, eine Anschlagvorrichtung für eine persönliche Schutzausrüstung an einem Dach anzubringen, das eine Dachhaut 1 in Form eines Trapezprofilblechs aufweist, das mit einer Wärmedämmung 2 abgedeckt ist. Um den Ankerbolzen 3 mit dem Anschlagpunkt 4 an der Dachkonstruktion sicher verankern zu können, bildet der Ankerbolzen 3 einen Kippdübel 5, der einen in einer Lagergabel 6 drehbar gelagerten Kippbalken 7 umfasst. Dieser Kippbalken 7 ist gemäß den Fig. 3 und 4 als zweiarmiger Hebel ausgebildet, von dessen Hebelarmen 8, 9 einer ein größeres Gewicht als der andere besitzt. Zu diesem Zweck ist gemäß dem Ausführungsbeispiel der Hebelarm 8 etwas länger als der Hebelarm 9 ausgebildet, der außerdem zur Gewichtseinsparung eine koaxiale Bohrung 10 aufweist. In der in der Fig. 3 dargestellten und in der Fig. 4 strichpunktiert angedeuteten Montagestellung, in der der Kippbalken 7 mit einem Anschlag 11 an einem Drehanschlag 12 der Lagergabel 6 anschlägt, kann der Kippdübel 5 durch eine Durchtrittsbohrung 13 in der Dachhaut 1 eingeführt werden, bis der Kippbalken 7 von der Durchtrittsbohrung 13 freigegeben wird. Aufgrund des Gewichtsmoments schwenkt der Kippbalken 7 in die in der Fig. 4 dargestellte Arbeitsstellung aus, wobei der Anschlag 11 ein Einschwenken des Hebelarms 9 in die Lagergabel 6 durch ein Anschlagen am Schenkel der Lagergabel 6 verhindert. Wird der Ankerbolzen 3 im Sinne eines Ausziehens aus der Durchtrittsbohrung 13 verlagert, so legt sich der Kippbalken 7 entsprechend den Fig. 1 und 2 an die Blechstege der Dachhaut 1 im Randbereich der Durchtrittsbohrung 13 an und verhindert ein Ausziehen des Ankerbolzens 3 aus der Durchtrittsbohrung 13. Wegen der durch die kreiszylindrische Querschnittsform des Kippbalkens 7 gegebenen, konvex gerundeten Anlagefläche am Blechsteg der Dachhaut 1 können örtliche Überlastungen des Blechstegs vermieden werden.

Der Ankerbolzen 3 wird durch eine Gewindestange 14 gebildet, die eine einfache Möglichkeit darstellt, die Anschlagvorrichtung an die jeweilige Dicke der Wärmedämmung 2 anzugleichen. Zur Befestigung der Lagergabel 6 an der Gewindestange 14 des Ankerbolzens 3 bildet die Lagergabel 6 einen U-förmigen Bügel, dessen Stegbereich 15 entsprechend den Fig. 3 und 4 von der Gewindestange 14 durchsetzt wird, wobei zur axialen Festlegung der Lagergabel 6 der Stegbereich 15 zwischen den beiden Schenkeln der Lagergabel 6 zwischen zwei Muttern 16 festgeklemmt wird.

Zur Sicherung der Arbeitsstellung des Kippdübels 5 ist die Wärmedämmung 2 im Bereich der Durchtrittsbohrung 13 für den Ankerbolzen 3 mit einer Anschlagscheibe 17 abgedeckt, auf der sich eine Abdeckdichtung 18 abstützt. Mit Hilfe einer Montagemutter 19 der Gewindestange 14 wird der Ankerbolzen 3 nicht nur in die Arbeitsstellung nach den Fig. 1 und 2 angezogen, sondern zugleich auch die Abdeckdichtung 18 an die Anschlagscheibe 17 bzw. die Wärmedämmung 2 angedrückt. Der über die Abdeckdichtung 18 vorstehende Abschnitt der Gewindestange 14 kann zusätzlich mit einem Stützrohr 20 umhüllt werden, das mittels einer Druckkappe 21 über eine Mutter 22 der Gewindestange 14 an die Abdeckdichtung 18 angedrückt gehalten wird.

## Patentansprüche

1. Anschlagvorrichtung für eine Absturzsicherung mit einem einen Anschlagpunkt (4) aufnehmenden, als Gewindestange (14) ausgebildeten Ankerbolzen (3), der einen Kippdübel (5) mit einem um eine Querachse anschlagbegrenzt zwischen einer eingeschwenkten Montagestellung und einer ausgeschwenkten Arbeitsstellung drehbar gelagerten, zweiarmigen Kippbalken (7) bildet, von dessen Hebelarmen (8, 9) einer ein größeres Gewicht als der andere besitzt, **dadurch gekennzeichnet, dass** der Kippbalken (7) in einer am Ende des Ankerbolzens (3) vorgesehenen Lagergabel (6) gelagert ist und eine in der Arbeitsstellung dem Anschlagpunkt (4) zugekehrte konvex gerundete Anlagefläche aufweist.

2. Anschlagvorrichtung nach Anspruch 1, **dadurch gekennzeichnet, dass** der Kippbalken (7) einen kreiszylindrischen Querschnitt aufweist.

3. Anschlagvorrichtung nach Anspruch 1 oder 2, **dadurch gekennzeichnet, dass** die Lagergabel (6) einen U-förmigen Bügel bildet, dass die Gewindestange (14) des Ankerbolzens (3) den U-förmigen Bügel im Stegbereich (15) zwischen den beiden Schenkeln durchsetzt und dass der Stegbereich (15) des U-förmigen Bügels am Ende der Gewindestange (14) zwischen zwei Muttern (16) festgeklemmt ist.
